(19) Europäisches Patentamt

European Patent Office

Office européen des brevets

(11) **EP 1 289 261 A1**

(12) **DEMANDE DE BREVET EUROPEEN**

(43) Date de publication:
**05.03.2003 Bulletin 2003/10**

(51) Int Cl.$^7$: **H04N 1/32**

(21) Numéro de dépôt: **02354132.9**

(22) Date de dépôt: **03.09.2002**

| | |
|---|---|
| (84) Etats contractants désignés:<br>**AT BE BG CH CY CZ DE DK EE ES FI FR GB GR IE IT LI LU MC NL PT SE SK TR**<br>Etats d'extension désignés:<br>**AL LT LV MK RO SI** | (72) Inventeur: **Petitjean, Guillaume**<br>**13530 Trets (FR)** |
| (30) Priorité: **04.09.2001 FR 0111433** | (74) Mandataire: **de Beaumont, Michel**<br>**Cabinet Michel de Beaumont**<br>**1, rue Champollion**<br>**38000 Grenoble (FR)** |
| (71) Demandeur: **STMicroelectronics S.A.**<br>**92120 Montrouge (FR)** | |

(54) **Procédé d'insertion de messages binaires dans une image numérique**

(57) L'invention concerne un procédé et un système d'insertion d'au moins un code binaire dans une image numérique (I), consistant à convertir le code en une modification de contours d'objets de l'image.

Fig 3A

EP 1 289 261 A1

Printed by Jouve, 75001 PARIS (FR)

## EP 1 289 261 A1

**Description**

La présente invention concerne l'insertion de codes ou messages binaires d'identification ou d'authentification dans des images numériques.

Un premier exemple d'application concerne l'insertion d'un identifiant du titulaire des droits relatifs à l'image pour permettre de détecter un éventuel piratage par distribution de copies illicites, voire remonter à sa source. Un deuxième exemple d'application est la protection contre des montages déformant ou falsifiant l'image afin de pouvoir garantir l'intégrité d'une image. La technique d'insertion de codes binaires dans des images numériques est généralement connue par son appellation anglo-saxonne "Watermarking" et a connu un développement récent avec l'essor des transmissions d'images numériques notamment par Internet. Devant le risque grandissant de copies illicites, les titulaires des droits d'auteur notamment, ont cherché des moyens pour protéger les contenus multimédias numériques.

Les deux exemples ci-dessus concernent des applications dites sécuritaires. On peut également trouver des applications non sécuritaires, par exemple, l'insertion de caractéristiques liées à la prise de vue ou autres informations de l'image.

Généralement, l'insertion d'un code concerne chaque image. Dans le cas d'une séquence animée, toutes les images comportent alors une insertion (par exemple, un code d'identification de l'auteur est reproduit dans toutes les images) . Dans cet exemple, il est par ailleurs possible que le contenu des codes respectifs soit lié à la séquence afin de détecter une éventuelle insertion ou suppression d'image.

Quelle que soit l'application, on utilise généralement un algorithme dit de marquage pour crypter et positionner dans l'image les codes à y insérer. Un algorithme inverse est utilisé pour restituer, selon l'application, les codes d'identification, d'authentification ou les caractéristiques de prise de vue, etc.

Classiquement, les algorithmes de marquage modifient soit certains pixels de l'image, soit certains coefficients d'une transformée de l'image (transformée de Fourier, transformée en cosinus discret, etc.). Les pixels ou coefficients à modifier sont généralement sélectionnés en utilisant une clef propre à l'utilisateur (le codeur). Les modifications peuvent être, par exemple, une inversion de couples de coefficients pour que leurs valeurs respectent une relation dépendant de la valeur du bit à cacher, ou un simple ajout du message à cacher préalablement modulé par un bruit blanc Gaussien.

La modification ou codage prend souvent la forme d'un ajout d'un bruit spécifique constituant le message caché. Il est par conséquent difficile de prévoir l'influence des modifications sur l'image finale qui peut même, dans certains cas, être dégradée de manière visible.

Le document US-B1-6 181 802 décrit un procédé de marquage d'images numériques consistant à localiser les régions dans lesquelles sont codées les informations au niveau des contours de l'image. Les contours ne sont pas modifiés dans leur tracé, ils ne sont donc pas déformés. On modifie selon ce document les pixels voisins du contour pour coder le message dans l'image.

Un autre inconvénient majeur des approches classiques est qu'elles ne permettent pas de retrouver le message caché une fois que l'image a subi certaines manipulations (modifications). Par exemple, si les pixels sont déplacés les uns par rapport aux autres (manipulation géométrique de type rotation, par exemple) ou s'ils sont modifiés par filtrage, compression, etc., il y a un risque important de perdre le message crypté. Parmi les manipulations les plus fréquentes qui sont susceptibles d'empêcher la restitution de messages, on citera le recadrage, une compression de type JPEG avant transmission de l'image en format numérique, ou une modification de contraste, de luminosité ou de taille de l'image.

Le problème ci-dessus est encore plus critique si l'image subit plusieurs manipulations successives, ce qui est de plus en plus souvent le cas avec les transmissions d'images par les réseaux de communication numériques.

La présente invention vise à pallier au moins un inconvénient des techniques connues. Plus particulièrement, l'invention vise à proposer un procédé d'insertion d'au moins un code binaire dans une image numérique qui permette de retrouver le ou les codes même une fois que l'image a subi une ou plusieurs manipulations.

L'invention vise également à proposer un procédé utilisant des techniques classiques de traitement d'image permettant sa mise en oeuvre par des appareils existants.

L'invention vise également à proposer une solution qui soit compatible avec l'utilisation d'algorithmes classiques de traitement d'image.

Pour atteindre ces objets et d'autres, la présente invention prévoit un procédé d'insertion d'au moins un code binaire dans une image numérique, consistant à convertir le code en une modification de contours d'objets de l'image.

Selon un mode de réalisation de la présente invention, le procédé comprend les étapes suivantes :

détecter des contours d'objets d'une image d'origine ;
isoler les contours du reste de l'image ;
calculer les descripteurs de Fourier des contours ;
modifier les descripteurs de Fourier de ces contours selon le code binaire à insérer dans l'image ; et

reconstruire l'image en tenant compte des nouveaux contours.

Selon un mode de réalisation de la présente invention, les descripteurs de Fourier correspondant aux centres de gravité respectifs des contours ne sont pas modifiés.

Selon un mode de réalisation de la présente invention, les descripteurs de Fourier correspondant aux facteurs d'échelle respectifs des contours ne sont pas modifiés.

Selon un mode de réalisation de la présente invention, on modifie uniquement les modules des descripteurs de Fourier.

Selon un mode de réalisation de la présente invention, pour chaque contour que l'on souhaite modifier, on choisit un couple de descripteurs de Fourier, et on modifie ces descripteurs pour que leur différence soit respectivement supérieure ou inférieure à un seuil prédéterminé selon que le bit stocké est 1 ou 0.

Selon un mode de réalisation de la présente invention, ledit seuil est fixé en fonction d'un compromis entre la visibilité des modifications à l'image et la sensibilité de l'insertion du code à des manipulations de l'image.

Selon un mode de réalisation de la présente invention, le procédé est appliqué à l'insertion d'un élément d'identification ou d'authentification de l'image considérée.

Selon un mode de réalisation de la présente invention, le procédé est appliqué à l'insertion, dans l'image, de caractéristiques de prise de vues de cette image.

L'invention prévoit également un procédé d'extraction d'au moins un code binaire inséré dans une image numérique, selon lequel on applique, aux contours d'une image, un algorithme d'extraction fonction de l'algorithme utilisé pour insérer le code.

L'invention prévoit également un système de traitement d'image numérique destiné à insérer un code binaire dans une image.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1 illustre, par une vue très schématique, une image avant insertion d'un code ou message numérique selon la présente invention ;
la figure 2 représente l'image de la figure 1 après insertion du message numérique selon la présente invention ;
la figure 3A illustre, sous forme de blocs et de façon très schématique, un mode de mise en oeuvre d'un procédé d'insertion de codes binaires selon l'invention ; et
la figure 3B illustre, sous forme de blocs et de façon très schématique, un mode de mise en oeuvre d'un procédé d'extraction de codes binaires selon l'invention.

Les mêmes éléments ont été désignés par les mêmes références aux différentes figures. Pour des raisons de clarté, seuls les éléments et étapes de procédé qui sont nécessaires à la compréhension de l'invention ont été représentés aux figures et seront décrits par la suite. En particulier, les différents algorithmes de traitement utilisés ne font pas en eux-mêmes l'objet de l'invention et ne seront pas détaillés pour être parfaitement connus.

Une caractéristique de la présente invention est d'utiliser les contours des éléments ou objets d'une image pour y cacher les identifiants ou plus généralement n'importe quels codes ou messages numériques.

Ainsi, selon l'invention, on n'utilise plus les pixels de l'image que ce soit de façon directe ou de façon indirecte (par modification des coefficients issus de différentes transformations), mais on déforme légèrement les contours des constituants de l'image, cette déformation représentant le message inséré. Selon l'invention, les contours ne sont pas choisis en tant que tels pour sélectionner des zones où les pixels (ou coefficients) doivent être modifiés mais sont sélectionnés pour qu'ils soient eux mêmes déformés. On fera parfois référence à une sélection des contours pour y insérer le message numérique. Cela signifie au sens de l'invention une sélection de ces contours pour insérer un message dans une image par déformation de ces mêmes contours.

Un avantage du choix des contours de l'image pour y insérer, par modification de ces contours, les messages numériques est que cela conduit à une solution particulièrement robuste (contre d'éventuels piratages ou modifications). En effet, en modifiant les caractéristiques de l'image qui portent le sens même de cette image, on minimise les risques de voir ces caractéristiques modifiées suite à un filtrage, une compression ou une modification géométrique. En particulier, les contours des objets d'une image sont respectés par des transformations de rotation, d'agrandissement, de translation, de modification de contraste, ainsi que de compression pour transmission.

En outre, même dans le cas extrême où une image est distordue au point que le message porté par la déformation des contours n'est plus identifiable, cette image n'est plus utilisable. Par conséquent, le fait que le message d'authentification ait été rendu indiscernable par une modification apportée par un éventuel pirate n'est alors pas un problème dans ce cas.

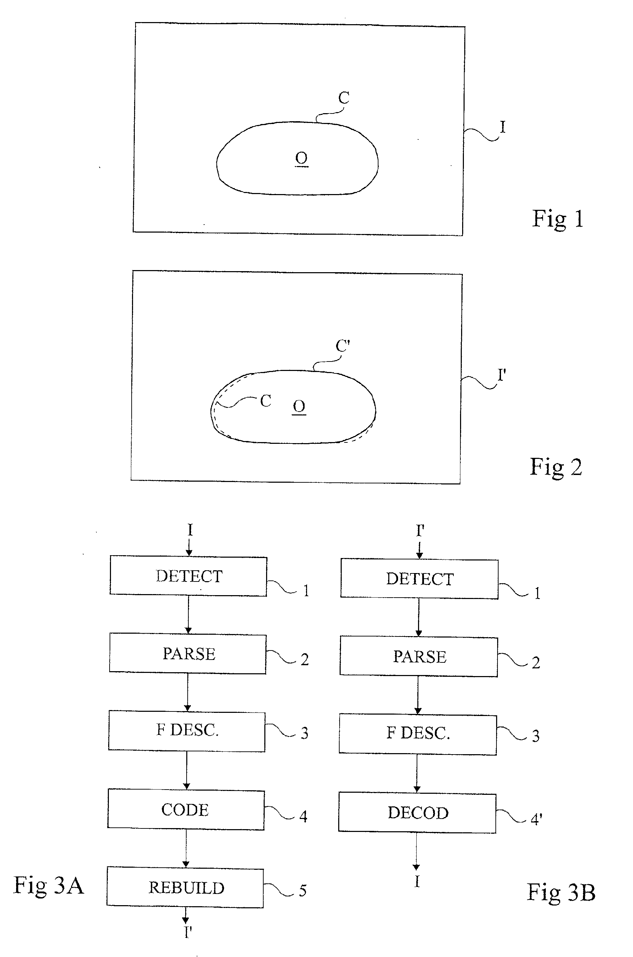

Les figures 1 et 2 sont des représentations très schématiques d'images I, respectivement I', illustrant la mise en oeuvre du procédé d'insertion selon l'invention.

La figure 1 représente une image avant mise en oeuvre du procédé. Dans cette image, un objet O a été représenté par son contour C.

La figure 2 représente la même image après mise en oeuvre du procédé. Le contour C de l'objet O de la figure 1 est devenu un contour C' légèrement modifié en partie gauche et droite de la figure. Le contour originel C de l'objet O est tracé en pointillés.

De préférence, l'insertion du code est répétée à plusieurs endroits de l'image, ce qui permet de maintenir l'identification même si une image se trouve découpée. La capacité accrue d'insertion de données numériques grâce à la déformation des contours accroît encore les possibilités de duplication du code permettant de le préserver, en cas de morcellement plus important d'une image que dans un cas classique. De plus, même si l'image se trouve recadrée, le mot pourra toujours être extrait puisque chaque morceau d'image contiendra forcément des contours de sorte que les données insérées seront toujours présentes.

Selon un mode de réalisation préféré, la modification des contours de l'image est effectuée en utilisant les descripteurs de Fourier de cette image qui constituent un outil classique pour décrire numériquement des contours. De tels descripteurs de Fourier présentent l'avantage notable, avec certaines précautions, d'être invariants à la fois par translation et rotation ainsi que par changement d'échelle de l'image. Par conséquent, même si l'image a subi une ou plusieurs rotations, un ou plusieurs changements de facteur d'échelle ou a été translatée, on pourra toujours récupérer les données puisque les descripteurs de Fourier utilisés ne seront pas affectés par ces transformations.

La figure 3A représente, sous forme d'organigramme très schématique, un mode de mise en oeuvre du procédé d'insertion de messages dans des images numériques selon la présente invention.

On part de l'image I d'origine dans laquelle on détecte (bloc 1, DETECT) les contours des différents objets de cette image. Par objet, on entend bien entendu tout contour quelle qu'en soit la nature. Cette détection peut être mise en oeuvre par des procédés classiques de détection de contours. Par exemple, on utilise des filtres plus ou moins sophistiqués permettant d'extraire les contours ainsi que les zones texturées.

Un exemple de méthode de détection de contours classique est décrit dans l'article "Computationnal approach to edge detection" de J. Canny paru dans la revue IEEE "Transactions on Pattern Analysis and Machine Intelligence" en novembre 1986, volume PAMI-8, N°6, pages 679 à 698.

On peut également utiliser un filtre passe-haut ayant, par exemple, une fonction de transfert h correspondant à la matrice de convolution :

$$h \; = \; \begin{bmatrix} -1 & -1 & -1 \\ -1 & 8 & -1 \\ -1 & -1 & -1 \end{bmatrix}$$

L'image des contours s'écrit alors C = I*h, où I est l'image d'origine et où * est l'opérateur de convolution.

Une fois les contours détectés, on doit effectuer la séparation des contours par rapport au reste de l'image et la séparation de chaque contour par rapport aux autres. Cette séparation (bloc 2, PARSE) s'effectue ligne à ligne en comparant chaque pixel à ses voisins.

On commence par obtenir une image binaire des contours en faisant un simple seuillage sur les valeurs des pixels. Puis, en supposant qu'un pixel appartenant à un contour soit identifié par un bit 1, pour chaque pixel de l'image, on regarde s'il s'agit d'un pixel de contour. Dans l'affirmative, si un pixel voisin du pixel courant appartient déjà à un contour $C_i$ (i représentant le rang arbitraire du contour parmi les m contours de l'image), alors le pixel courant appartient également à ce contour $C_i$. Dans la négative, on crée un nouveau contour $C_{i+1}$ et le pixel courant appartient à ce nouveau contour.

L'étape suivante (bloc 3, FDESC) consiste à calculer pour chaque contour $C_i$, les descripteurs de Fourier correspondants $Z_k$. Cela correspond, pour k compris entre -(n/2)+1 et n/2 (n représentant le nombre de pixels du contour), à appliquer la formule suivante :

$$Z_k \; = \; \sum_{p=0}^{n} \left( z_p \cdot \exp^{(-2\pi j p k)} \right), \qquad \text{(formule 1)}$$

où $z_p$ est le nombre complexe associé au pixel p du contour considéré ($z_p = x_p + j.y_p$), et où j désigne la partie imaginaire d'un nombre complexe.

Selon la présente invention, dans l'étape suivante (bloc 4, CODE), on modifie les contours en modifiant leurs descripteurs.

Afin de disposer d'un système robuste, on ne modifie pas le descripteur $Z_0$ qui correspond au centre de gravité des descripteurs de Fourier. En effet, il s'agit du seul coefficient qui n'est pas invariant par translation, tous les autres l'étant. De plus, on évite également de modifier le descripteur $Z_1$ qui correspond au facteur d'échelle. Enfin, afin de rendre le codage insensible aux rotations de l'image, on ne s'intéresse qu'aux modules des descripteurs $Z_k$.

En d'autres termes, selon un mode de réalisation préféré de l'invention, on modifie uniquement les modules des descripteurs $Z_k$ pour $k \neq 0$ et 1.

Différentes méthodes classiques peuvent être mises en oeuvre pour coder un message binaire par modification des coefficients définis ci-dessus. Le choix de la méthode dépend de l'application, notamment, de la longueur des messages à insérer dans les images.

Selon un mode de réalisation préféré permettant une extraction aveugle des données insérées, c'est-à-dire sans connaissance de l'image originelle ni du code à extraire, le codage est effectué de la façon suivante.

Pour chaque contour $C_i$, on choisit un couple de coefficients $(Z_q, Z_r)$, q et r étant choisis, par exemple, en appliquant une clef secrète et en utilisant un générateur de nombres aléatoires. Les rangs q et r des coefficients choisis sont de préférence suffisamment élevés (par exemple, supérieurs en valeur absolue à 3) afin de ne pas modifier les basses fréquences du contour, ce qui rendrait visible la modification. Ils doivent de plus ne pas être trop élevés (par exemple, inférieurs en valeur absolue à 1/(5n), n étant le nombre de pixels du contour) afin qu'un simple filtre passe-bas ne gomme pas les informations contenues dans le coefficient considéré.

Pour chaque bit du contour, on opère alors les transformations suivantes :

- Si le bit est égal à 1 et si $Z_q < Z_r + T$, où T est une constante positive, on modifie $Z_q$ et $Z_r$ pour obtenir $Z_q > Z_r + T$ (par exemple, on effectue $Z_q = Z_r + T$).
- Si le bit est égal à 0 et si $Z_q > Z_r - T$, on modifie $Z_q$ et $Z_r$ pour obtenir $Z_q < Z_r - T$ (par exemple, on effectue $Z_q = Z_r - T$).

La constante T permet de régler la visibilité et la robustesse de l'insertion. Plus T est grand, moins il y a de risque que $Z_q - Z_r$ change de signe suite à des manipulations de l'image, donc plus l'insertion est robuste. Plus T est petit, moins les modifications (déformations) des contours seront importantes donc moins elles seront visibles sur l'image I' finale. On effectue donc un compromis entre robustesse et visibilité selon les applications.

Pour cacher plusieurs bits dans un même contour, il suffit d'appliquer, selon la méthode décrite ci-dessus, la transformation à plusieurs couples de coefficients.

Une fois les contours déformés par modification des descripteurs de Fourier, l'image est reconstituée (reconstruite). En effet, on a perdu l'information image (couleur, contraste, etc.) des pixels situés en bordure des contours d'origine qui ont été modifiés (plus précisément, certains pixels bordant chaque contour dans l'image d'origine ont vu leurs caractéristiques modifiées pour devenir des pixels d'un contour déformé). La reconstruction (bloc 5, REBUILD) consiste à modifier les pixels compris entre les contours initiaux et les contours modifiés afin que les deux côtés des nouveaux contours soient déformés de la même manière que l'ont été les contours. En d'autres termes, on opère un remplissage de l'image afin de s'approcher au mieux des remplissages initiaux des bordures des contours modifiés.

Un exemple de procédé pour modifier une image en fonction des déplacements de certains pixels dont on pourra s'inspirer pour modifier le remplissage (voisinage des contours) suite à la modification des contours d'origine est décrit dans le brevet américain N° 5 175 808.

La figure 3B illustre, par un organigramme très schématique, un exemple de procédé de décodage d'une donnée insérée dans une image numérique selon l'invention.

On part de l'image codée I'. Si les descripteurs de Fourier des contours sont restés disponibles depuis l'insertion du message, on effectue directement un décodage (BLOC 4', DECODE) ou une extraction en appliquant un algorithme adapté fonction du codage. Sinon, on opère d'abord une recherche des contours C' (bloc 1, DETECT), une séparation des contours détectés du reste de l'image (bloc 2, PARSE) et un calcul des descripteurs de Fourier de chaque contour $C'_i$ (bloc 3, FDESC). Ces trois étapes préalables éventuelles sont les mêmes que lors de l'insertion (figure 3A).

Le décodage consiste à extraire, des contours C', les données numériques qui ne correspondent pas à l'image d'origine mais qui contiennent le code inséré.

En reprenant l'exemple des couples de coefficients $(Z_q, Z_r)$, il suffit de générer de nouveau le couple de coefficients concerné et de calculer la valeur $Z_q - Z_r$. Selon le signe de cette valeur, le bit caché est égal à 1 ou 0 ($Z_q - Z_r > 0$ signifie un bit à 1, $Zq - Z_r < 0$ signifie un bit à 0).

Un avantage de marquer les images par un simple codage de couples de coefficients est que cela permet une lecture beaucoup plus facile du message inséré dans l'image lors du décodage.

Les étapes des procédés d'insertion et d'extraction selon l'invention peuvent être effectuées successivement pour chaque contour, mais seront préférentiellement effectuées pour toute une image avant de passer à l'étape suivante, en utilisant des moyens de mémorisation classiques.

Bien entendu, la présente invention est susceptible de diverses variantes et modifications qui apparaîtront à l'homme de l'art. En particulier, l'invention s'applique quel que soit le type de message(s) que l'on souhaite insérer dans une image et quel que soit le type d'images considéré pourvu que celles-ci puissent être codées numériquement.

De plus, divers algorithmes pourront être utilisés en lieu et place de ceux indiqués dans la présente invention description, un avantage de l'invention étant de permettre l'utilisation d'algorithmes classiques.

En outre, tous les contours d'une image ne sont pas forcément traités. La sélection des contours dans lesquels doit être inséré le code ou doivent être insérés différents codes peut être aléatoire ou définie par un algorithme prenant en compte, par exemple, les longueurs des contours.

Enfin, l'invention peut être mise en oeuvre en utilisant des outils classiques (matériels et logiciels) dont les adaptations nécessaires pour respecter le séquencement des traitements prévus par l'invention sont à la portée de l'homme du métier à partir des indications fonctionnelles données ci-dessus.

**Revendications**

1. Procédé d'insertion d'au moins un code binaire dans une image numérique (I), **caractérisé en ce qu'**il consiste à convertir le code en une déformation de contours (C) d'objets (O) de l'image.

2. Procédé selon la revendication 1, **caractérisé en ce qu'**il comprend les étapes suivantes :

    détecter des contours (C) d'objets (O) d'une image d'origine (I) ;
    isoler les contours du reste de l'image ;
    calculer les descripteurs de Fourier ($Z_k$) des contours ;
    modifier les descripteurs de Fourier de ces contours selon le code binaire à insérer dans l'image ; et
    reconstruire l'image en tenant compte des nouveaux contours.

3. Procédé selon la revendication 2, **caractérisé en ce que** les descripteurs de Fourier ($Z_0$) correspondant aux centres de gravité respectifs des contours (C) ne sont pas modifiés.

4. Procédé selon la revendication 2 ou 3, **caractérisé en ce que** les descripteurs de Fourier ($Z_1$) correspondant aux facteurs d'échelle respectifs des contours (C) ne sont pas modifiés.

5. Procédé selon l'une quelconque des revendications 2 à 4, **caractérisé en ce qu'**on modifie uniquement les modules des descripteurs de Fourier ($Z_k$).

6. Procédé selon l'une quelconque des revendications 2 à 5, **caractérisé en ce**, pour chaque contour ($C_i$) que l'on souhaite modifier, il comprend les étapes suivantes :

    choisir un couple de descripteurs de Fourier ($Z_q$, $Z_r$) ; et
    modifier ces descripteurs pour que leur différence soit respectivement supérieure ou inférieure à un seuil prédéterminé (T) selon que le bit stocké est 1 ou 0.

7. Procédé selon la revendication 6, **caractérise en ce que** ledit seuil (T) est fixé en fonction d'un compromis entre la visibilité des modifications à l'image (I) et la sensibilité de l'insertion du code à des manipulations de l'image.

8. Procédé selon une quelconque des revendications 1 à 7, **caractérisé en ce qu'**il est appliqué à l'insertion d'un élément d'identification ou d'authentification de l'image considérée.

9. Procédé selon l'une quelconque des revendications 1 à 7, **caractérisé en ce qu'**il est appliqué à l'insertion, dans l'image, de caractéristiques de prise de vues de cette image.

10. Procédé d'extraction d'au moins un code binaire inséré dans une image numérique par la mise en oeuvre du procédé selon l'une quelconque des revendications 1 à 9, **caractérisé en ce qu'**il consiste à appliquer, aux contours (C') d'une image (I'), un algorithme d'extraction fonction de l'algorithme utilisé pour insérer le code.

11. Système de traitement d'image numérique destiné à insérer un code binaire dans une image, **caractérisé en ce qu'**il comprend des moyens pour la mise en oeuvre du procédé selon l'une quelconque des revendications 1 à 10.

Fig 1

Fig 2

Fig 3A

Fig 3B

**EP 1 289 261 A1**

Office européen
des brevets

**RAPPORT DE RECHERCHE EUROPEENNE**

Numéro de la demande

EP 02 35 4132

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 6 181 802 B1 (TODD MARTIN PETER) 30 janvier 2001 (2001-01-30) | 1 | H04N1/32 |
| A | * abrégé * * colonne 1, ligne 66 - colonne 2, ligne 28 * * revendications 4,6 * | 2-11 | |
| D,A | CANNY J: "A COMPUTATIONAL APPROACH TO EDGE DETECTION" IEEE TRANSACTIONS ON PATTERN ANALYSIS AND MACHINE INTELLIGENCE, IEEE INC. NEW YORK, US, vol. PAMI-8, no. 6, novembre 1986 (1986-11), pages 679-698, XP000604891 ISSN: 0162-8828 * abrégé * * figure 8 * | 1-11 | |
| A | EP 0 845 757 A (IBM) 3 juin 1998 (1998-06-03) * abrégé * * figures 6,8 * | 1-11 | **DOMAINES TECHNIQUES RECHERCHES (Int.Cl.7)** H04N |

Le présent rapport a été établi pour toutes les revendications

| Lieu de la recherche | Date d'achèvement de la recherche | Examinateur |
|---|---|---|
| LA HAYE | 11 octobre 2002 | Stoffers, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 35 4132

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-10-2002

| Document brevet cité au rapport de recherche | | Date de publication | Membre(s) de la famille de brevet(s) | | Date de publication |
|---|---|---|---|---|---|
| US 6181802 | B1 | 30-01-2001 | CA | 2212328 A1 | 15-08-1996 |
| | | | DE | 69617467 D1 | 10-01-2002 |
| | | | DE | 69617467 T2 | 22-08-2002 |
| | | | EP | 0878094 A1 | 18-11-1998 |
| | | | WO | 9625005 A1 | 15-08-1996 |
| | | | JP | 10513324 T | 15-12-1998 |
| EP 0845757 | A | 03-06-1998 | JP | 10164349 A | 19-06-1998 |
| | | | CA | 2220816 A1 | 27-05-1998 |
| | | | CN | 1191356 A | 26-08-1998 |
| | | | EP | 0845757 A2 | 03-06-1998 |
| | | | SG | 79951 A1 | 17-04-2001 |
| | | | US | 6286100 B1 | 04-09-2001 |

EPO FORM P0460

Pour tout renseignement concernant cette annexe : voir Journal Officiel de l'Office européen des brevets, No.12/82